# EUROPEAN PATENT APPLICATION

(11) **EP 3 862 915 A1**
(43) Date of publication of application: **11.08.2021**
(21) Application number: 19879208.7
(22) Date of filing: 16.09.2019
(51) Int. Cl.: G06K 9/00

(54) **FINGERPRINT MODULE, ELECTRONIC DEVICE AND FINGERPRINT ACQUISITION METHOD**

(30) Priority: 30.10.2018 CN 201821777832 U; 30.10.2018 CN 201811280520
(71) Applicant: GUANGDONG OPPO MOBILE TELECOMMUNICATIONS CORP., LTD., Dongguan, Guangdong 523860 (CN)
(72) Inventor: WU, Anping, Dongguan, Guangdong 523860 (CN); YANG, Le, Dongguan, Guangdong 523860 (CN)
(74) Representative: Ipside
(86) International application number: PCT/CN2019/105991
(87) International publication number: WO 2020/088129

(57) **Abstract**

Disclosed in the present application is a fingerprint module, applied to an electronic device comprising a screen and a fingerprint module. The fingerprint module is provided below a preset area of the screen. The screen is provided with a first polarizer. The fingerprint module comprises a collimating lens and an optical fingerprint sensor, and the collimating lens is provided on the side of the optical fingerprint sensor close to the screen. The collimating lens is provided with a second polarizer, and polarization directions of the first polarizer and the second polarizer are consistent. The first polarizer and the second polarizer are configured to filter first light, and the first light is light, among light emitted from the screen in a first direction, reflected by the screen. The second polarizer is configured to filter the second light, and the second light is light emitted from the screen in a second direction. The embodiments of the present application further provide an electronic device and a fingerprint acquisition method. By means of the embodiments of the present application, optical noise is filtered, improving the quality of the acquired fingerprint image.

## Description

### TECHNICAL FIELD

The present application relates to the field of electronic technology, and in particular, to a fingerprint module, an electronic device, and a fingerprint acquisition method.

### BACKGROUND

The principle of fingerprint acquisition under a screen is to use light emitted by the screen to illuminate a finger placed on the screen. When reaching the finger, the light emitted by the screen is reflected. An optical fingerprint module disposed under the screen receives a reflected light signal, a light absorption amplitude varies because of uneven veins of a fingerprint, so that a fingerprint image with different brightness and darkness is obtained. At present, an optical fingerprint module may affect quality of acquired fingerprint images due to some optical noise.

### SUMMARY OF THE DISCLOSURE

Embodiments of the present application provides a fingerprint module, an electronic device, and a fingerprint acquisition method, which are configured to filter and improve quality of acquired fingerprint images.

In a first aspect, an embodiment of the present application provides a fingerprint module applicable to an electronic device, the electronic device comprises a screen and the fingerprint module. The fingerprint module is provided below a preset area of the screen. The screen is provided with a first polarizer. The fingerprint module comprises a collimating lens and an optical fingerprint sensor, and the collimating lens is provided on a side of the optical fingerprint sensor close to the screen. The collimating lens is provided with a second polarizer, and polarization directions of the first polarizer and the second polarizer are consistent. The first polarizer and the second polarizer are configured to filter first light, and the first light is light reflected by the screen among light emitted from the screen in a first direction. The second polarizer is configured to filter second light, and the second light is light emitted from the screen in a second direction. Both the first direction and the second direction are perpendicular to the screen, the first direction directs outside of the electronic device, and the second direction directs inside of the electronic device.

In a second aspect, an embodiment of the present application provides an electronic device, the electronic device comprises a screen and the fingerprint module. The fingerprint module is provided below a preset area of the screen. The screen is provided with a first polarizer. The fingerprint module comprises a collimating lens and an optical fingerprint sensor, and the collimating lens is provided on a side of the optical fingerprint sensor close to the screen. The collimating lens is provided with a second polarizer, and polarization directions of the first polarizer and the second polarizer are consistent. The first polarizer and the second polarizer are configured to filter first light, and the first light is light reflected by the screen among light emitted from the screen in a first direction. The second polarizer is configured to filter second light, and the second light is light emitted from the screen in a second direction. Both the first direction and the second direction are perpendicular to the screen, the first direction directs outside of the electronic device, and the second direction directs inside of the electronic device.

In a third aspect, an embodiment of the present application provides a fingerprint acquisition method applicable to an electronic device, the electronic device comprises a screen and the fingerprint module. The fingerprint module is provided below a preset area of the screen. The screen is provided with a first polarizer. The fingerprint module comprises a collimating lens and an optical fingerprint sensor, and the collimating lens is provided on a side of the optical fingerprint sensor close to the screen. The collimating lens is provided with a second polarizer, and polarization directions of the first polarizer and the second polarizer are consistent. The method comprises: in response to detecting a fingerprint acquisition instruction, lightening the screen and actuating the fingerprint module; first light reflected by the screen among light emitted from the screen in a first direction is filtered by the first polarizer and the second polarizer, second light emitted from the screen in a second direction is filtered by the second polarizer; wherein both the first direction and the second direction are perpendicular to the screen, the first direction directs outside of the electronic device, and the second direction directs inside of the electronic device; acquiring third light by the fingerprint module, and processing to obtain a fingerprint image, wherein the third light is light reflected by a fingerprint of a user among light emitted from the screen in a first direction.

In a fourth aspect, an embodiment of the present application provides a mobile terminal comprising a processor, a memory, a communication interface, and one or more program; wherein, the one or more program is stored in the memory and configured to be executed by the processor, and the program comprises instructions configured to execute the operations of the method according to the third aspect of embodiments of the present application.

In a fifth aspect, an embodiment of the present application provides a computer readable storage medium, wherein, the computer readable storage medium stores a computer program configured for electronic data exchange; wherein, the computer program enables a computer to execute some or all operations as described in the method according to the third aspect of embodiments of the present application.

In a sixth aspect, an embodiment of the present application provides a computer program product, wherein, the computer program product comprises a non-transitory computer readable storage medium storing a computer program, the computer program is operable to enable a computer to execute some or all operations as described in the method according to the third aspect of embodiments of the present application. The computer program product can be a software installation package.

It can be seen that in embodiment of the present application, optical noise affecting the fingerprint module is generally the first light and the second light. The first light is light reflected by the screen among light emitted from the screen in a first direction, and the second light is light emitted from the screen in a second direction. Both the first direction and the second direction are perpendicular to the screen, the first direction directs outside of the electronic device, and the second direction directs inside of the electronic device. The first light is filtered by the first polarizer disposed on the screen and the second polarizer disposed on the collimating lens, and the second light is filtered by the second polarizer, such that influence of the two kinds of optical noise on the fingerprint module is reduced when acquiring fingerprints, and thus quality of acquired fingerprint images is improved.

### BRIEF DESCRIPTION OF THE DRAWINGS

In order to describe technical solutions in embodiments of the present application or in the prior art more clearly, drawings required being used in description of the embodiments or the prior art will be simply introduced below. Obviously, the drawings in the following description are merely some embodiments of the present application. For one of ordinary skill in the art, it is also possible to obtain other drawings according to these drawings without paying any creative work.
FIG. 1 is a structural schematic view of an electronic device provided by an embodiment of the present application.
FIG. 2 is a structural schematic diagram of a fingerprint module provided by an embodiment of the present application.
FIG. 3 is a structural schematic view of three kinds of collimating lenses provided by an embodiment of the present application.
FIG. 4 is a schematic flowchart of a fingerprint acquisition method provided by an embodiment of the present application.
FIG. 5 is a structural schematic diagram of an electronic device provided by an embodiment of the present application.
FIG. 6 is a structural schematic diagram of a fingerprint acquisition device provided by an embodiment of the present application.

### DETAILED DESCRIPTION

In order to make those skilled in the art better understand solutions of the present application, technical solutions in embodiments of the present application will be described clearly and completely below in accompany with drawings in embodiments of the present application. Obviously, the described embodiments are merely some embodiments of the present application, but not all embodiments. Based on embodiments of the present application, all other embodiments obtained by one of ordinary skill in the art without paying any creative work should belong to the protection scope of the present application.

Detailed descriptions are respectively given below.

The terms "first", "second", "third", "fourth" and the like in the specification, claims, and drawings of the present application are used to distinguish different objects, rather than describing a specific order. In addition, the terms "including", "having", and any variations thereof are intended to cover non-exclusive inclusions. For example, a process, method, system, product, or device that includes a series of steps or units is not limited to the listed steps or units, but optionally further includes unlisted steps or units, or optionally also includes other steps or units inherent to these processes, methods, products or equipment.

Mentioning "embodiments" herein means that a specific feature, structure, or characteristic described in accompany with the embodiments may be included in at least one embodiment of the present application. The appearance of the phrase in various places in the specification does not necessarily refer to the same embodiment, nor is it an independent or alternative embodiment mutually exclusive with other embodiments. Those skilled in the art can explicitly and implicitly understand that the embodiments described herein can be combined with other embodiments.

Electronic devices can include various handheld devices with wireless communication functions, vehicle-mounted devices, wearable devices, computing devices or other processing devices connected to wireless modems, as well as various forms of user equipment (UE), mobile stations (MS), terminal device, etc.

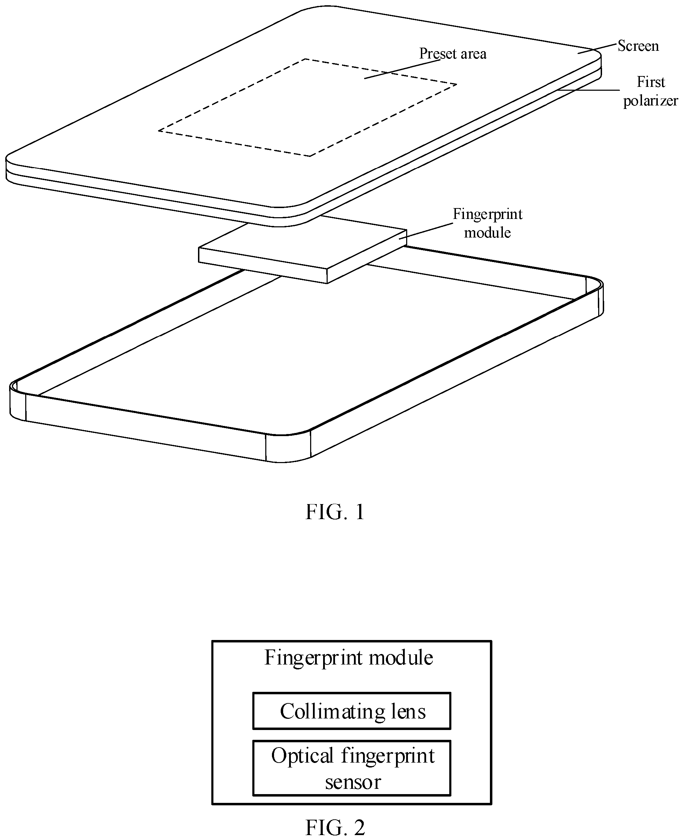

Referring to FIG. 1 and FIG. 2, FIG. 1 is a structural schematic view of an electronic device provided by an embodiment of the present application, and FIG. 2 is a structural schematic diagram of a fingerprint module provided by an embodiment of the present application. A fingerprint module provided by the present application is applicable to an electronic device, the electronic device comprises a screen and the fingerprint module. The fingerprint module is provided below a preset area of the screen. The screen is provided with a first polarizer. The fingerprint module comprises a collimating lens and an optical fingerprint sensor, and the collimating lens is provided on a side of the optical fingerprint sensor close to the screen. The collimating lens is provided with a second polarizer, and polarization directions of the first polarizer and the second polarizer are consistent. The first polarizer and the second polarizer are configured to filter first light, and the first light is light reflected by the screen among light emitted from the screen in a first direction. The second polarizer is configured to filter the second light, and the second light is light emitted from the screen in a second direction. Both the first direction and the second direction are perpendicular to the screen, the first direction directs outside of the electronic device, and the second direction directs inside of the electronic device.

In this embodiment, on the basis of FIG. 1, the first direction is perpendicular to the screen and directs outside of the electronic device, that is, the first direction is an upward direction perpendicular to the screen; the second direction is perpendicular to the screen and directs inside of the electronic device, that is, the second direction is a downward direction perpendicular to the screen.

In this embodiment, the preset area can a part of the screen, and can also be the whole screen, this is not limited here. In the case that the preset area is a part of the screen, a position where the preset area is located can be a center of the screen, an upper left corner of the screen, an upper right corner of the screen, a lower left corner of the screen, etc., and is not limited here. In the case that the preset area is a part of the screen, a size of the preset area can be 5mmx5mm, 8mm×8mm, 1cm×1cm, or other values. In the case that the preset area is a part of the screen, a shape of the preset area can be square, rectangle, ellipse, polygon, etc., and is not limited here.

In this embodiment, the first polarizer is disposed above a display layer of the screen, a function of the polarizer is reducing reflection of outside light. The screen comprises a cover plate glass, a display screen, and a touch screen, and thus the first polarizer is above the display screen.

In this embodiment, the first light is light reflected by an upper surface of the screen (i.e., an outside glass of the screen, that is, the cover plate glass) among light emitted from the screen in a first direction.

In this embodiment, a full name of a polarizer is a polarization filter, which can control a polarization direction of a certain light beam. When natural light passes through a polarizer, light of which a vibration direction is perpendicular to a transmission axis of the polarizer will be absorbed, and transmitted light only comprises polarized light of which a vibration direction is parallel to the transmission axis of the polarizer.

It can be seen that in this embodiment of the present application, the second light is light emitted vertically downwards from the screen; when the second light passes through the second polarizer, only light of which a polarization direction is the same as that of the second polarizer is allowed to pass, therefore, after passing through the second polarizer, the second light will attenuate. The first light is light reflected by the screen among light emitted vertically upwards from the screen, so the first light has already been light of which a polarization direction is the same as that of the first polarizer, which is obtained after passing through the first polarizer. After passing through a medium, the polarization direction of the first light will change; thus, after passing through the first polarizer and the second polarizer, the first light will also attenuate. Regarding light reflected by a fingerprint of a user, since its polarization direction is consistent with that of the polarizers, passing through the polarizers has less effect on the light, such that influence of the two kinds of optical noise on the fingerprint module is reduced when acquiring fingerprints, and thus quality of acquired fingerprint images is improved.

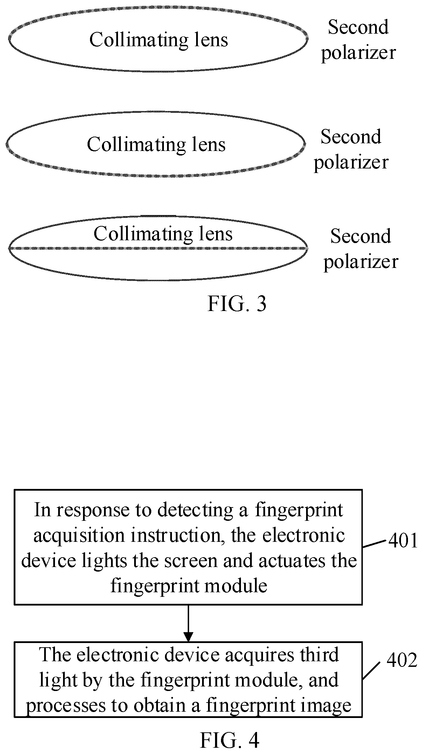

In one implementation of the present application, that the collimating lens is provided with the second polarizer comprises that: a top surface of the collimating lens is provided with the second polarizer; or a middle of the collimating lens is provided with the second polarizer; or a bottom surface of the collimating lens is provided with the second polarizer. The details are shown in FIG. 3.

In one implementation of the present application, the collimating lens and the second polarizer are disposed integrally, or disposed layer by layer.

In one embodiment, the second polarizer is disposed on a top surface or a bottom surface of the collimating lens. Disposing integrally refers to embedding the polarizer into the top surface or the bottom surface of the collimating lens to form a collimating lens with a polarization function, or coating a polarization film by means of optically coating on the top surface or the bottom surface of the collimating to form a collimating lens with a polarization function.

In one embodiment, the second polarizer is disposed at a middle of the collimating lens. Disposing integrally refers to embedding the polarizer into the middle of the collimating lens to form a collimating lens with a polarization function.

In one embodiment, the second polarizer is disposed on a top surface or a bottom surface of the collimating lens. Disposing layer by layer refers to attaching a layer of polarizer on the top surface or the bottom surface of the collimating lens.

In one implementation of the present application, a surface of the optical fingerprint sensor is provided with an infrared radiation (IR) film. Main functions of the IR film are blocking infrared light and transmitting visible light. The IR film can be manufactured by optical coating.

In one implementation of the present application, a surface of the collimating lens is provided with an IR film.

Specifically, when the second polarizer is disposed at the middle of the collimating lens, the IR film can be disposed on the top surface or the bottom surface of the collimating lens; when the second polarizer is disposed on the top surface of the collimating lens, and the second polarizer is disposed on the collimating lens by means of optical coating, the IR film can be disposed at the bottom surface of the collimating lens; when the second polarizer is disposed on the top surface of the collimating lens, and the second polarizer is disposed on the collimating lens in a manner of layer by layer, the IR film can be disposed at the top surface or the bottom surface of the collimating lens; when the second polarizer is disposed on the bottom surface of the collimating lens, and the second polarizer is disposed on the collimating lens by means of optical coating, the IR film can be disposed at the top surface of the collimating lens; when the second polarizer is disposed on the bottom surface of the collimating lens, and the second polarizer is disposed on the collimating lens in a manner of layer by layer, the IR film can be disposed at the top surface or the bottom surface of the collimating lens.

It can be seen that the IR film is disposed on a surface of the optical fingerprint sensor or the collimating lens, infrared light can be filtered, and quality of acquired fingerprint images can be further improved.

In one implementation of the present application, the screen includes a liquid crystal display (LCD) screen or an organic light-emitting diode (OLED) screen.

In one implementation of the present application, the first light and the second light are light emitted from the preset area.

It can be seen that only lighting the preset area when acquiring fingerprint images can reduce power consumption of the electronic device and improve the service life of the electronic device.

In one implementation of the present application, the first light and the second light are light in a single color, the single color includes single green, single red, or single blue.

Furthermore, when the single color is single green, the first light and the second light are light emitted from green pixels in the preset area. When the single color is single red, the first light and the second light are light emitted from red pixels in the preset area. When the single color is single blue, the first light and the second light are light emitted from blue pixels in the preset area.

Furthermore, when acquiring fingerprint images, the red, green, and blue pixels in the preset area are used in turn. For example, the green pixels in the preset area are used this time, the red pixels in the preset area are used the next time, the blue pixels in the preset area are used the further next time, and the green pixels in the preset area are used the still further next time, and so on.

Since the preset area are always used, the service life of the preset area will be affected. In embodiments of the present application, the red, green, and blue pixels are used in turn, and thus the service life of the preset area is prolonged.

Referring to FIG. 4, FIG. 4 is a schematic flow chart of a fingerprint acquisition method provided by an embodiment of the present application, which is applied in the aforesaid electronic device. The method comprises the follows.

Operation 401: in response to detecting a fingerprint acquisition instruction, the electronic device lights the screen and actuates the fingerprint module; first light reflected by the screen among light emitted from the screen in a first direction is filtered by the first polarizer and the second polarizer, and second light emitted from the screen in a second direction is filtered by the second polarizer; both the first direction and the second direction are perpendicular to the screen, the first direction directs outside of the electronic device, and the second direction directs inside of the electronic device.

Operation 402, the electronic device acquires third light by the fingerprint module and processes to obtain a fingerprint image, wherein the third light is light reflected by a fingerprint of a user among light emitted from the screen in a first direction.

It can be seen that in embodiments of the present application, the second light is light emitted vertically downwards from the screen; when the second light passes through the second polarizer, only light of which a polarization direction is the same as that of the second polarizer is allowed to pass, therefore, after passing through the second polarizer, the second light will attenuate. The first light is light reflected by the screen among light emitted vertically upwards from the screen, so the first light has already been light of which a polarization direction is the same as that of the first polarizer, which is obtained after passing through the first polarizer. After passing through a medium, the polarization direction of the first light will change; thus, after passing through the first polarizer and the second polarizer, the first light will also attenuate. Regarding light reflected by a fingerprint of a user, since its polarization direction is consistent with that of the polarizers, passing through the polarizers has less effect on the light, such that influence of the two kinds of optical noise on the fingerprint module is reduced when acquiring fingerprints, and thus quality of acquired fingerprint images is improved.

Furthermore, that the electronic device lights the screen comprises that the electronic device lights the preset area of the screen.

Furthermore, that the electronic device lights the preset area of the screen comprises that the electronic device lights the preset area to a target brightness.

In this embodiment, the target brightness is a preset brightness; or the target brightness is determined by the electronic device according to an ambient light brightness of an environment where the electronic device is currently located, for example, a target brightness corresponding to the ambient light brightness is determined according to a mapping relationship between the ambient light brightness and the brightness of the preset area. Alternatively, the target brightness is determined by the electronic device according to a current geographic location of the electronic device, for example, a target brightness corresponding to the current geographic location is determined according to a mapping relationship between the geographic location and the brightness of the preset area; and so on.

It can be seen that increasing only the brightness of the preset area when acquiring fingerprint images can reduce power consumption.

Furthermore, the detecting a fingerprint acquisition instruction comprises that: in a case that detecting a long press operation aiming at the preset area, or in a case that a click operation aiming at a first area of the preset area is first detected, and a long press operation aiming at a second area of the preset area is then detected, or in the case that a clock operation aiming at an area of the screen except the preset area is first detected, and a long press operation aiming at the preset area is then detected, the electronic device detects the fingerprint acquisition instruction; the first area is different from the second area.

It can be seen that the fingerprint acquisition instruction is triggered by relatively complicated operations, and thus mistaken operations of users are avoided.

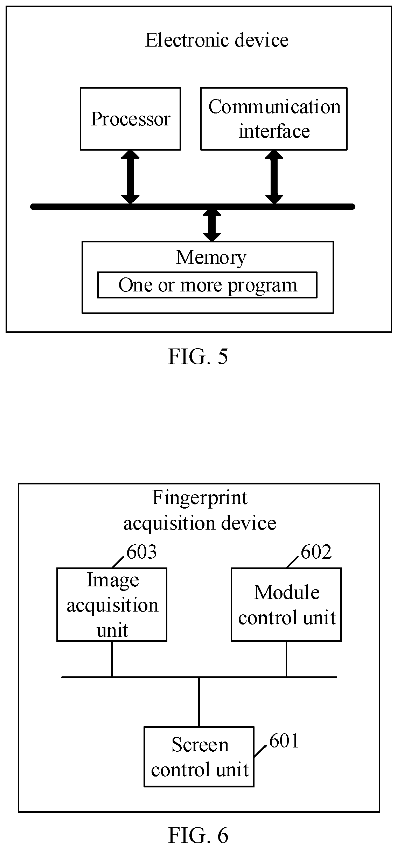

Consistently with the embodiment shown in FIG. 4, referring to FIG. 5, FIG. 5 is a structural schematic diagram of an electronic device provided by an embodiment of the present application. As shown in the figure, the electronic device comprises a screen and the fingerprint module. The fingerprint module is provided below a preset area of the screen. The screen is provided with a first polarizer. The fingerprint module comprises a collimating lens and an optical fingerprint sensor, and the collimating lens is provided on a side of the optical fingerprint sensor close to the screen. The collimating lens is provided with a second polarizer, and polarization directions of the first polarizer and the second polarizer are consistent. The electronic device further comprises a processor, a memory, a communication interface, and one or more program; wherein, the one or more program is stored in the memory and configured to be executed by the processor, and the program comprises instructions configured to execute the following operations: in response to detecting a fingerprint acquisition instruction, lighting the screen and actuating the fingerprint module; first light reflected by the screen among light emitted from the screen in a first direction being filtered by the first polarizer and the second polarizer, and second light emitted from the screen in a second direction being filtered by the second polarizer; wherein both the first direction and the second direction are perpendicular to the screen, the first direction directs outside of the electronic device, and the second direction directs inside of the electronic device; acquiring third light by the fingerprint module and processing to obtain a fingerprint image, wherein the third light is light reflected by a fingerprint of a user among light emitted from the screen in a first direction.

It can be seen that in embodiments of the present application, the second light is light emitted vertically downwards from the screen; when the second light passes through the second polarizer, only light of which a polarization direction is the same as that of the second polarizer is allowed to pass, therefore, after passing through the second polarizer, the second light will attenuate. The first light is light reflected by the screen among light emitted vertically upwards from the screen, so the first light has already been light of which a polarization direction is the same as that of the first polarizer, which is obtained after passing through the first polarizer. After passing through a medium, the polarization direction of the first light will change; thus, after passing through the first polarizer and the second polarizer, the first light will also attenuate. Regarding light reflected by a fingerprint of a user, since its polarization direction is consistent with that of the polarizers, passing through the polarizers has less effect on the light, such that influence of the two kinds of optical noise on the fingerprint module is reduced when acquiring fingerprints, and thus quality of acquired fingerprint images is improved.

In one implementation of the present application, in the aspect of lighting the screen, the program comprises an instruction specifically configured to execute the following operation: lighting the preset area of the screen.

It should be noted that a specific implementing process of this embodiment can refer to the specific implementing process described in the above method embodiment, and is not repeated here.

The foregoing embodiments mainly introduce solutions of the embodiments of the present application from the perspective of an execution process on a method side. It can be understood that, in order to implement the above-mentioned functions, the electronic device includes hardware structures and/or software modules corresponding to execution of each function. Those skilled in the art should easily realize that, in combination with the units and algorithm steps of the examples described in the embodiments disclosed herein, the present application can be implemented in the form of hardware or a combination of hardware and computer software. Whether a certain function is executed by means of hardware or computer software-driven hardware depends on specific application and design constraint conditions of a technical solution. Professionals and technicians can use different methods for each specific application to implement described functions, but such implementation should not be considered as being beyond the scope of the present application.

Embodiments of the present application may divide the electronic device into functional units according to the method examples. For example, each functional unit may be divided corresponding to each function, or two or more functions may be integrated into one processing unit. The integrated unit can be implemented in the form of hardware, and can also be implemented in the form of software functional units. It should be noted that the division of units in the embodiments of the present application is illustrative, and is only a logical function division; there may be other division methods in actual implementation.

The following is a device embodiment of the present application. The device embodiment of the present application is configured to execute the method implemented by the method embodiment of the present application. Referring to FIG. 6, FIG. 6 shows a fingerprint acquisition device provided by an embodiment of the present application, which is applied in the aforesaid electronic device. The fingerprint acquisition device comprises: a screen control unit 601 configured to light the screen in response to detecting a fingerprint acquisition instruction; a module control unit 602 configured to actuate the fingerprint module, such that first light reflected by the screen among light emitted from the screen in a first direction is filtered by the first polarizer and the second polarizer, and second light emitted from the screen in a second direction is filtered by the second polarizer; wherein both the first direction and the second direction are perpendicular to the screen, the first direction directs outside of the electronic device, and the second direction directs inside of the electronic device; and an image acquisition unit 603 configured to acquire third light by the fingerprint module and process to obtain a fingerprint image, wherein the third light is light reflected by a fingerprint of a user among light emitted from the screen in a first direction.

It can be seen that in embodiments of the present application, the second light is light emitted vertically downwards from the screen; when the second light passes through the second polarizer, only light of which a polarization direction is the same as that of the second polarizer is allowed to pass, therefore, after passing through the second polarizer, the second light will attenuate. The first light is light reflected by the screen among light emitted vertically upwards from the screen, so the first light has already been light of which a polarization direction is the same as that of the first polarizer, which is obtained after passing through the first polarizer. After passing through a medium, the polarization direction of the first light will change; thus, after passing through the first polarizer and the second polarizer, the first light will also attenuate. Regarding light reflected by a fingerprint of a user, since its polarization direction is consistent with that of the polarizers, passing through the polarizers has less effect on the light, such that influence of the two kinds of optical noise on the fingerprint module is reduced when acquiring fingerprints, and thus quality of acquired fingerprint images is improved.

In an implementation of the present application, in the aspect of lighting the screen, the screen control unit is specifically configured to: light the preset area of the screen.

It should be noted that the screen control unit 601, the module control unit 602, and the image acquisition unit 603 can be implemented by a processor.

An embodiment of the present application further provides a computer readable storage medium, wherein, the computer readable storage medium stores a computer program configured for electronic data exchange; the computer program enables a computer to execute some or all operations of any method as described in the above method embodiments, and the computer includes an electronic device.

An embodiment of the present application further provides a computer program product, wherein, the computer program product comprises a non-transitory computer readable storage medium storing a computer program, the computer program is operable to enable a computer to execute some or all operations of any method as described in the above method embodiments. The computer program product can be a software installation package, and the computer includes an electronic device.

It should be noted that for the foregoing method embodiments, for the sake of simple description, they are all expressed as a series of action combinations; but those skilled in the art should know that the present application is not limited by the described sequences of actions. Because according to the present application, some steps can be performed in other orders or at the same time. Secondly, those skilled in the art should also know that the embodiments described in the specification are all preferred embodiments, and the actions and modules involved are not necessarily required by the present application.

In the above embodiments, the description of each embodiment has its own emphasis. For parts that are not described in detail in a certain embodiment, reference may be made to related descriptions of other embodiments.

In the embodiments provided by the present application, it should be understood that the disclosed device may be implemented in other ways. For example, the device embodiments described above are merely illustrative. For example, the division of the units is only a logical function division. In actual implementation, there may be other division methods, for example, multiple units or components may be combined or may be integrated into another system, or some features can be ignored or not implemented. In addition, the displayed or discussed mutual coupling, or direct coupling, or communication connection, may be indirect coupling or communication connection through some interfaces, devices or units, and may be in electrical or other forms.

The units described as separate components may be or may not be physically separated, and the components displayed as units may be or may not be physical units, that is, they may be located in one place, or may also be distributed on multiple network units. Some or all of the units may be selected according to actual requirements to achieve the objectives of the solutions of the embodiments.

In addition, the functional units in the various embodiments of the present application may be integrated into one processing unit, or each unit may physically exist alone, or two or more units may be integrated into one unit. The above-mentioned integrated unit can be implemented in the form of hardware, and can also be implemented in the form of software functional units.

If the integrated units are implemented in the form of software functional units and sold or used as independent products, they can be stored in a computer readable memory. Based on such understanding, the technical solution of the present application essentially, or the part that contributes to the existing technology, or all or a part of the technical solution can be embodied in the form of a software product. The computer software product is stored in a memory, which comprises a number of instructions configured to enable a computer device (which may be a personal computer, a server, a network device, etc.) to execute all or some of the steps of the foregoing methods of the embodiments of the present application. The aforementioned memory includes various media that can store program codes, such as a U-disk, a read-only memory (ROM), a random access memory (RAM), a mobile hard disk, a magnetic disk, an optical disk, and so on.

Those of ordinary skill in the art can understand that all or some of the steps in the various methods of the above-mentioned embodiments can be completed by instructing relevant hardware using a program. The program can be stored in a computer readable memory, and the memory can include: a flash disk, a read-only memory (ROM), a random access memory (RAM), a magnetic disk, an optical disk, and so on.

Embodiments of the present application are described in detail above, and specific examples are used herein to illustrate principles and implementations of the present application. The descriptions of the above embodiments are only used to help understand methods and core ideas of the present application. At the same time, for those of ordinary skill in the art, according to the idea of the present application, there will be changes in both the specific implementation and the scope of application. In summary, the content of this specification should not be construed as any limitation to the present application.

## Claims

1. A fingerprint module applicable to an electronic device, wherein the electronic device comprises a screen and the fingerprint module, the fingerprint module is provided below a preset area of the screen; the screen is provided with a first polarizer, the fingerprint module comprises a collimating lens and an optical fingerprint sensor, and the collimating lens is provided on a side of the optical fingerprint sensor close to the screen; the collimating lens is provided with a second polarizer, and polarization directions of the first polarizer and the second polarizer are consistent; the first polarizer and the second polarizer are configured to filter first light, and the first light is light reflected by the screen among light emitted from the screen in a first direction; the second polarizer is configured to filter second light, and the second light is light emitted from the screen in a second direction; both the first direction and the second direction are perpendicular to the screen, the first direction directs outside of the electronic device, and the second direction directs inside of the electronic device.

2. The fingerprint module according to claim 1, wherein that the collimating lens is provided with a second polarizer comprises that the second polarizer is disposed on a top surface of the collimating lens.

3. The fingerprint module according to claim 1, wherein that the collimating lens is provided with a second polarizer comprises that the second polarizer is disposed at a middle of the collimating lens.

4. The fingerprint module according to claim 1, wherein that the collimating lens is provided with a second polarizer comprises that the second polarizer is disposed on a bottom surface of the collimating lens.

5. The fingerprint module according to any one of claims 1-4, wherein the collimating lens and the second polarizer are disposed integrally.

6. The fingerprint module according to any one of claims 1-4, wherein the collimating lens and the second polarizer are disposed layer by layer.

7. The fingerprint module according to any one of claims 1-6, wherein a surface of the optical fingerprint sensor is provided with an infrared radiation (IR) film.

8. The fingerprint module according to any one of claims 1-7, wherein a surface of the collimating lens is provided with an IR film.

9. The fingerprint module according to any one of claims 1-8, wherein both the first light and the second light are light in a single color.

10. The fingerprint module according to claim 9, wherein the single color comprises single green, single red, and single blue.

11. The fingerprint module according to any one of claims 1-10, wherein both the first light and the second light are light emitted from the preset area.

12. An electronic device comprising a screen and a fingerprint module, wherein the fingerprint module is provided below a preset area of the screen; the screen is provided with a first polarizer, the fingerprint module comprises a collimating lens and an optical fingerprint sensor, and the collimating lens is provided on a side of the optical fingerprint sensor close to the screen; the collimating lens is provided with a second polarizer, and polarization directions of the first polarizer and the second polarizer are consistent; the first polarizer and the second polarizer are configured to filter first light, and the first light is light reflected by the screen among light emitted from the screen in a first direction; the second polarizer is configured to filter second light, and the second light is light emitted from the screen in a second direction; both the first direction and the second direction are perpendicular to the screen, the first direction directs outside of the electronic device, and the second direction directs inside of the electronic device.

13. The electronic device according to claim 12, wherein the screen comprises a liquid crystal display (LCD) screen and an organic light emitting diode (OLED) screen.

14. The electronic device according to claim 12 or 13, wherein the preset area is a part of the screen or the whole screen.

15. A fingerprint acquisition method applicable to an electronic device, wherein the electronic device comprises a screen and a fingerprint module, the fingerprint module is provided below a preset area of the screen; the screen is provided with a first polarizer, the fingerprint module comprises a collimating lens and an optical fingerprint sensor, and the collimating lens is provided on a side of the optical fingerprint sensor close to the screen; the collimating lens is provided with a second polarizer, and polarization directions of the first polarizer and the second polarizer are consistent; the method comprises:
in response to detecting a fingerprint acquisition instruction, lighting the screen and actuating the fingerprint module; filtering first light reflected by the screen among light emitted from the screen in a first direction by the first polarizer and the second polarizer, and filtering second light emitted from the screen in a second direction by the second polarizer; wherein both the first direction and the second direction are perpendicular to the screen, the first direction directs outside of the electronic device, and the second direction directs inside of the electronic device; and
acquiring third light by the fingerprint module and processing to obtain a fingerprint image, wherein the third light is light reflected by a fingerprint of a user among light emitted from the screen in a first direction.

16. The method according to claim 15, wherein the lighting the screen comprises lighting the preset area of the screen.

17. A fingerprint acquisition device applicable to an electronic device, wherein the electronic device comprises a screen and a fingerprint module, the fingerprint module is provided below a preset area of the screen; the screen is provided with a first polarizer, the fingerprint module comprises a collimating lens and an optical fingerprint sensor, and the collimating lens is provided on a side of the optical fingerprint sensor close to the screen; the collimating lens is provided with a second polarizer, and polarization directions of the first polarizer and the second polarizer are consistent;
a screen control unit configured to light the screen in response to detecting a fingerprint acquisition instruction;
a module control unit configured to actuate the fingerprint module, such that first light reflected by the screen among light emitted from the screen in a first direction is filtered by the first polarizer and the second polarizer, and second light emitted from the screen in a second direction is filtered by the second polarizer; wherein both the first direction and the second direction are perpendicular to the screen, the first direction directs outside of the electronic device, and the second direction directs inside of the electronic device; and
an image acquisition unit configured to acquire third light by the fingerprint module and process to obtain a fingerprint image, wherein the third light is light reflected by a fingerprint of a user among light emitted from the screen in a first direction.

18. The device according to claim 17, wherein the aspect of lighting the screen, the screen control unit is specifically configured to light the preset area of the screen.

19. An electronic device comprising a screen and a fingerprint module, wherein the fingerprint module is provided below a preset area of the screen; the screen is provided with a first polarizer, the fingerprint module comprises a collimating lens and an optical fingerprint sensor, and the collimating lens is provided on a side of the optical fingerprint sensor close to the screen; the collimating lens is provided with a second polarizer, and polarization directions of the first polarizer and the second polarizer are consistent; the electronic device further comprises a processor, a memory, a communication interface, and one or more program; the one or more program is stored in the memory and configured to be executed by the processor, and the program comprises instructions configured to execute operations of the method according to claim 15 or 16.

20. A computer readable storage medium storing a computer program, wherein the computer program is processed to execute the method according to claim 15 or 16.
